# EUROPEAN PATENT SPECIFICATION

(11) **EP 3 563 045 B1**
(45) Date of publication and mention of the grant of the patent: **05.10.2022**
(21) Application number: 17889144.6
(22) Date of filing: 27.12.2017
(51) Int. Cl.: F01M 1/10, F01M 11/03, F16N 39/06, F01D 25/18, F02C 7/06, B01D 65/00, C10M 175/00, C10M 175/06, C10N 30/04, C10N 40/02, C10N 40/12, C10N 40/30, F02C 6/18, B01D 61/14, B01D 65/02, B01D 71/02

(54) **AN INDUSTRIAL PLANT WITH A LUBRICATION OIL CLEANING SYSTEM AND A METHOD OF OPERATING THE INDUSTRIAL PLANT**
INDUSTRIEWERK MIT EINEM SCHMIERÖLREINIGUNGSSYSTEM UND VERFAHREN ZUM BETRIEB DES INDUSTRIEWERKS
INSTALLATION INDUSTRIELLE DOTÉE D'UN SYSTÈME DE NETTOYAGE D'HUILE DE LUBRIFICATION ET PROCÉDÉ DE FONCTIONNEMENT DE L'INSTALLATION INDUSTRIELLE

(30) Priority: 28.12.2016 DK PA201671052
(43) Date of publication of application: 06.11.2019
(73) Proprietor: Ocean Team Group A/S, 6700 Esbjerg (DK)
(72) Inventor: THOMSEN, Jens Peder Høg, 6800 Varde (DK)
(74) Representative: Patrade A/S
(86) International application number: PCT/DK2017/050453
(87) International publication number: WO 2018/121828

(56) References cited:
- WO-A1-95/08609
- WO-A1-2008/030187
- WO-A2-2012/157955
- WO-A2-2012/157955
- AU-A4- 2008 100 772
- AU-A4- 2008 100 772
- CN-A- 102 182 520
- US-A1- 2009 071 913
- US-A1- 2009 071 913
- US-A1- 2015 014 254
- US-A1- 2016 169 068

## Description

### FIELD OF THE INVENTION

The present invention relates to cleaning of lubrication oil for axial-flow gas compressors, gas turbines, or steam turbines. In particular it relates to an industrial plant, for example gas pumping station or power plant with a lubrication oil cleaning system as well as an add-on oil cleaning system for an industrial plant. It also relates to a method of lubricating the bearings of such gas compressor or turbine and to use of the method and oil cleaning system for minimizing the risk for varnish formation and explosions.

### BACKGROUND OF THE INVENTION

For removing particles from oil in vehicle engines, ceramic materials have been proposed in various forms, for example by flow through a microporous ceramic membrane or by adsorption onto ceramic granules.

In connection with automobiles, EP1731726 by Peugeot not only discloses removal of submicron particles but also removal of sludge by adsorption on a particulate ceramic surface, for example ceramic beads in a container through which oil flows. As an example, porous SiC material is mentioned for the ceramic particles. Pore sizes for removal by adsorption are preferably in the order of 0.5-5 micron.

GB340638 from 1929 discloses a lubricating system having a pressurised source of lubricant and a metering unit for supplying the lubricant to chassis bearings of automobiles, in which the metering unit comprises a ceramic capillary member through which the lubricant passes.

Degradation of oil in internal combustion engines by submicron particles is discussed in US2016/0024982, which proposes a ceramic filter, for example SiC filter, with a honeycomb structure and pore sizes in the range of 0.1-1 micron, where the ceramic filter is used in addition to a conventional oil filter. The reference mentions that additives such as viscosity index improver pass through such a filter, but not the submicron particles. Experiments showed that a pore size of 0.2 micron did not remove the additive, but it was partially removed by a pore size of 0.1 micron, indicating that a pore size of 0.2 micron and above is suitable if additives are not to be removed.

A honeycomb SiC lubrication filter is described in detail for automotive use in the article that is titled "Novel Ceramic Oil Filter" from 2005 by Yiannis Lavendis from Northeastern University in Boston, which is published on the Internet https://repository.library.northeastern.edu/files/neu:377579. The article describes a filtration efficacy of 99.6% for 4 micron particles. Recycling of the filter is proposed by crushing of the ceramic filter and re-use of the material after disposal of the oil.

US2009/071913 discloses a filter system for a diesel engine. The filter system comprises ceramic filter and a backwash facility with oil from a tank, which is pressurised in order for the pressurised air driving the pressurised oil backwards through the filter.

WO2012/157955 discloses a method oil purification method, where nanoparticles are removed from heated oil by a sintered nanoporous membrane comprising a plurality of carbon nanostructure-metal or -metal oxide composites. It is disclosed useful for purifying oil for vehicles, ships, insulation, turbines, freezers, beatings, automatic transmission, compressors, cutting or thermal media.

A metal oxide membrane is also disclosed in WO2008/030187 for filtering chemical or biological synthetic and mineral oil, including crude oil, lubricating oil and fuel oil for a combustion engine, turbine engine, generator and heater, hydraulic transfer oil, or edible oil.

WO95/08609 discloses an apparatus for recycling of oil by microfiltration through pores with sizes in the range of 0.1-0.5 micron.

Whereas as the use of ceramic porous materials has been specifically discussed as being useful for vehicle engines or automobile chassis bearings, this discussion is lacking for steam or gas turbines in power plants. In practice, it is customary to use cellulose based filters or glass fibre filters for oil cleaning in connection with turbines. These appear to work satisfactory with respect to filtration and are preferred due to low costs for changing filters. A proposal for using cellulose filters for a turbine of a power plant is disclosed US2015/014254.

These types of filters have gained increasing attention. However, for turbines, in comparison to combustion engines in automobiles, a different problem exists in connection with the use of such type of filters, namely electrostatic charge generation. Such electrostatic charge generation not only implies a risk for damage but also implies a fire hazard, as electrostatic spark ignition can cause fire and explosions. Typically, electrically grounded filter housings and pipelines are used as a safety measure. However, this is not sufficient, as the oil may carry charges with them and create electrostatic charge outside the filter. The problem of electrostatic charging is discussed in more detail in the article "Overcoming Electrostatic Charge Generation - Incorporating a Novel Filter Media" by Leonard Bensch et al, published in the January edition of "Practicing Oil Analysis", also published in 2016 on the following Internet site http://www.machinerylubrication.com/Read/828/electrostatic-charge-generation. In this article, it is put forward that, despite grounded filter housings, "It does not stop fluid charge generation or internal damage to the filter or other system components caused by sparking." As a preventive measure, various solutions are presented in this article, for example including a conductive nonwoven material in the glass fibre filter or metal sleeves. However, even with surface modification, this turned out not to be sufficient. In particular, it reads, in this article "Surface modified conventional glass fibre materials showed significant charge reduction and lower potential material damage compared to the standard glass fibre filtration material. However, the surface modification alone was not enough to prevent material damage completely."

Accordingly, it appears that no optimum solution has yet been found for prevention of electrostatic charge formation.

However, a few proposals are found in the literature. US2016/0169086 discloses a turbine bearing lubricant filtration system. A dry gas source is in communication with the lubricant reservoir. The filter is made of a microfiber material (DERT Media Technology) configured for reduced electrostatic potential.

In general, as it appears from the above, filtration of lubricant of machinery, especially of turbines, is a complex issue, involving considerations of proper particle and sludge removal, prevention of sludge formation, as well as prevention of damage caused by electrostatic charge generation. All these factors are important for optimizing the lifetime of the turbines, as these are very expensive parts of the power plant and not simple to replace. It would therefore be desirable to provide further alternative improvements.

### DESCRIPTION / SUMMARY OF THE INVENTION

Accordingly, it is an objective of the invention to provide an improvement in the art. In particular, it is an objective to provide optimised filter systems for lubrication oil used for bearings of steam or gas turbines as well as of axial-flow gas compressors. It is a further objective to provide a method and system for extending the lifetime of oil in a steam or gas turbine, for example of a power plant, or of an axial-flow compressor, for example in a gas pumping station. The objective is achieved by a method and system for cleaning oil, as will be described in more detail in the following.

It is pointed out that the term "a turbine" or "a compressor" is used for simplicity and not limiting the invention to a single device but covers equally well a plurality of turbines and compressors as well as their combinations. For example, a gas turbine for combustion of gases, typically, also comprises a gas compressor upstream of the turbine. In turn, a combustion turbine can also be used to drive an axial-flow compressor for compressing gas, for example natural gas, for the purpose of distribution of gas in a pipeline system or storage and not for combustion by the same apparatus.

In particular, the oil cleaning system of the invention comprises a microporous ceramic filter membrane, for example a silicon carbide (SiC) filter membrane. Examples of alternative ceramic membranes include ceramics of alumina (aluminium dioxide), zirconia (zirconium dioxide) or titania (titanium dioxide).

As an introduction, it is pointed out that use of ceramic filter membranes for cleaning oil from steam or gas turbines have not been discussed as it has for vehicle engines. Especially, there is a lack of discussion whether ceramic filters would be advantageous in connection with oil cleaning for turbines, in particular for prevention of electrostatic charge generation.

Ceramic filters have turned out to be superior to glass fibre filter with respect to reduction of electrostatic charge generation. This is at least partially due to the fact that glass fibres are an efficient insulator with a resistivity in the order of 10¹⁰ ohm·cm, whereas ceramic filter media have a typical resistivity of only 1 ohm·cm, which is a factor of 10 billion times less. It is pointed out that the resistivity of cellulose is even higher than for glass.

In order to be useful for turbine lubricants, however, it must also be safeguarded that the filtration capabilities are at least comparable with glass fibre filters or cellulose fibre filters. In this connection, the problem related to varnish must have great attention. As already indicated in the introduction, cellulose-based filters or glass fibre filters are generally preferred in current existing power plants with turbine installations for removal of not only particles but also varnish. However, as will be explained in more detail below, ceramic filters for lubricants in steam and gas turbines have been proven experimentally to also be superior to cellulose filters when it comes to removal of sludge/varnish.

In connection with the invention, it was shown in tests on oil from a power plant that the varnish content of the oil was at critical levels despite being continuously filtered through cellulose based filters, where the cellulose based filters were approved by experts for the power plant in conditions of steady operation. By using ceramic filters, the varnish content could be efficiently reduced. This improvement is not only affecting the oil as such but also the machinery, as varnish has a tendency to settle on metallic parts and increase the wear.

In addition to the ability of ceramic filters to efficiently remove already existing varnish, there must be put emphasis on the fact that ceramic filters were found experimentally to be superior for minimizing varnish formation. In more detail, when using a ceramic filter, varnish formation risk in turbine oil could be reduced multi-fold with a reduction of a varnish potential rating (VPR) from a critical level 40 to a positive level 5, where all levels below 15 are regarded as satisfactory for normal operation. This improvement is the more surprising when seeing that expert opinions advice using cellulose based filters for preventing varnish in the lubrication system of turbines.

Improved removal of varnish as well as improved removal of precursors for varnish formation by switching to a ceramic membrane, not only the lifetime of the lubrication oil is extended but, above all, also the lifetime of the turbine.

An example of an industrial plant, for which the oil cleaning system is useful, is a power plant comprising an electrical generator driven by a turbine, for example gas turbine or steam turbine, the turbine comprising bearings, where the bearings are connected to an oil circulation system with a circulation pump for circulation of oil through the bearings for lubrication thereof. A gas turbine, typically, also comprises an axial-flow gas compressor upstream of the turbine gas combustion chamber, and the gas compressor also comprises bearings that have to be lubricated.

The oil cleaning system is also useful for other types of industrial plants, for example gas pumping stations in which natural gas is pumped at high volume and speed by an axial-flow compressor into a pipeline system, for example connected to a gas reservoir for storage of gas at elevated pressure. In this case, the compressor comprises bearings connected to an oil circulation system with a circulation pump for circulation of oil through the bearings for lubrication thereof.

Optionally, the oil cleaning system is an integrated part of the industrial plant, for example power plant or gas pumping station. Alternatively, the oil cleaning system is an add-on unit that is connectable to the oil circulation system of the industrial plant. Once connected, a portion of the oil is branched off the oil circulation system and driven through the oil cleaning system.

The oil cleaning system comprises an inlet for receiving oil at a first pressure level and an outlet for delivering the received oil back in cleaned condition for lubrication of the bearings. The oil cleaning system further comprises a filter housing between the inlet and the outlet and a microporous ceramic filter membrane inside the filter housing. In case of the oil cleaning system being an add-on unit, it comprises an inlet connectable to the oil circulation system for receiving oil from the oil circulation system at a first pressure level for filtration of the oil and an outlet connectable to the oil circulation system for delivering the oil back to the oil circulation system after filtration. Typically only a minor portion of the oil from the power plant's oil circulation system is branched off into the oil cleaning system and returned therefrom, while the dominating part of the oil is circulating in the oil circulation system and through the bearings.

The microporous ceramic filter membrane in the oil cleaning system separates an upstream side in the filter housing from a downstream side in the filter housing. Due to sealing in the filter housing, flow from the upstream side to the downstream side in the filter housing is only possible through the membrane. For filtering, a flow of the oil is provided into the inlet of the oil cleaning system, from the inlet into the upstream side in filter housing, through the membrane into the downstream side, from the downstream side to the outlet, where the oil flows out of the oil cleaning system for returning the oil for lubricating the bearings.

Optionally, the oil cleaning system does not by itself comprise a pump that is driving the oil through the oil cleaning system during normal operation, but, instead, the oil is pumped through the oil cleaning system by the circulation pump of the oil circulation system of the industrial plant, for example power plant or pumping station. This has the advantage that the oil cleaning system, especially when provided as an add-on unit, can be designed smaller and at lower cost as compared to also comprising a separate pump. Thus, in some embodiments, the add-on oil cleaning system is configured for flow of oil through the inlet and from the upstream side to the downstream side through the filter and out of the outlet by oil pressure caused only by the circulation pump of the oil circulation system.

The oil cleaning system comprises a backwash facility for backwashing the filter with backwash oil. The backwash oil is taken from the oil in the oil circulation system, typically from the portion that flows through the oil cleaning system. The backwash oil is pressurized to a second pressure level, which is higher than the first pressure level in the oil circulation system, and accumulated in a high-pressure oil accumulator. The high-pressure oil accumulator is pipe-connected to the downstream side of the filter housing. During normal filtering, the high-pressure oil accumulator is decoupled from the downstream side by a valve, which is opened in the event of backwash, for example periodical backwash. The higher pressure in the high-pressure oil accumulator is used to press the backwash oil against the first pressure level backwards through the microporous ceramic filter membrane and into the upstream side during backwashing. For example, the first pressure level in the range of 2-3 bars, and the second pressure level is multiple times this pressure, optionally in the range of 6-10 bars.

Typically, for the pressurization of the oil from the first to the second pressure level, the backwash facility comprises a hydraulic pressure intensifier. For example, the pressure intensifier is of the type comprising two mutually connected pistons with different diameters, wherein the one piston is a large-area hydraulic piston configured for receiving pressure from inflow oil at an inflow side of the intensifier, where the large area hydraulic piston pushes the other piston, which is a small-area hydraulic ram, acting against outflow oil at an outflow side of the intensifier for thereby pressurizing the outflow oil.

Such pressure intensifier is working due to the pressure of the oil and does not need an electrical motor for driving it and there is also no necessity for an additional electrical pump. This is advantageous in areas with explosives, for example if the turbine is driven by fuel gas, which is explosive. Also, this is useful in gas pumping stations, where risks for explosion have to be minimized.

In some embodiments, the backwash facility further comprises a backwash accumulator that is pipe-connected to the upstream side. During backwashing of the filter, the backwash accumulator receives backwash oil at the second pressure level from the upstream side.

For example, the backwash accumulator is connected to a particle separator for flow of oil from the backwash accumulator for the particle separator. The particle separator comprises a tank with a bottom and is configured for settling of the particles at the bottom, from which they can be drained through a drain. Once, the particles have settled on the bottom, the remaining oil is taken out of the particle separator through an oil drain above the bottom. Optionally, the oil taken out from the particle separator is returned through a pipe to the upstream side in the filter housing while not backwashing. In order to optimize particle settling in the particle separator, turbulence should be avoided or at least minimized. For this reason, backwash oil from the backwash accumulator flows through a throttle to the particle separator, where the throttle is adjusted to not causing turbulence in the particle separator, for example due to a non-turbulent flow into the particle separator. For example, the flow from the throttle into the particle separator is a laminar flow.

Optionally, backwash of the filter is done periodically with a first volume of backwash oil from the high-pressure oil accumulator. This backwash oil downstream of the filter is accumulated in the backwash accumulator. After the backwash, the backwash accumulator has to be emptied or partially emptied prior to the next backwash cycle in order to have space enough for taking up the next portion of backwash oil. Accordingly, after a backwash cycle, a flow of backwash oil from the backwash accumulator is provided to the particle separator corresponding to at least the first volume prior to a subsequent backwash with a first volume of backwash oil in order to provide sufficient space in the backwash accumulator for taking up backwash oil corresponding to the first volume. Thus, the backwash periodicity and the time it takes to empty the backwash accumulator through the throttle into the particle separator have to be adjusted.

As the flow into the particle separator should not cause turbulence, the flow through the throttle is limited to relatively slow non-turbulent flow in the particle separator. However, this results in a certain time for emptying or partially emptying the backwash accumulator. This time is a minimum time between backwash cycles. If the backwash cycle is done with a first volume, the same volume has to be removed from the backwash accumulator prior to the next backwash cycle.

In some embodiments, the oil cleaning system, or the industrial plant in general, comprises an air injection facility for injecting air into the oil for take up of water from the oil by the air. Optionally, the air injection facility comprises an air-drier for removing moisture from the air prior to injecting the air into the oil for increasing the water uptake capability of the air. A possibility for drying air is by cooling it down to low temperatures, thereby lowering the dew point of the air and extracting the water by condensation.

After insertion of dry air into the oil as fine bubbles and humidification of the air by take up of moisture from the oil, the humidified air has to be removed again from the system. For this function an air separation facility, for example a gas separator, is provided, optionally at an upper part of the filter housing.

Advantageously, the air and/or other gas is removed by the separator at a position downstream of the filter, for example from the downstream side in the filter housing. Surprisingly, it has turned out that the ceramic membrane influences the release of the air from the oil in that the finely dispersed air is rather released from the oil on the downstream side as compared to the upstream side. It is believed that this effect is due to a stretching of the oil when flowing through the small membrane pores. The humidified air can then be easily removed from the downstream stream side in which it rises to the top volume of the filter housing.

This increased separation effect of the air from the oil as induced by the membrane is very useful not only in removal of humidified air but also other gases. For example, gas compressors introduce gas into the oil due to minute leakages from the high pressure gas side to the lubrication side of the compressor, which lowers the flash point of the oil and increases the risk for explosion. In this even, the ceramic membrane is a useful tool in minimizing the risk for explosion by separating the gas from the oil. In comparison, it has to be pointed out that the cellulose filters and glass fibre filters have a tendency for electrostatic charge formation, which further increases the risk for explosions. The ceramic filter does not have such tendency.

### SHORT DESCRIPTION OF THE DRAWINGS

The invention will be explained in more detail with reference to the drawing, where
- FIG. 1: is a scheme for a waste to energy plant with a steam turbine, brochure from http://www.volund.dk/∼/media/Downloads/Brochures_-_WTE/L90_-_Esbjerg_-_Denmark.pdf;
- FIG. 2: is a hydraulic flow chart for an example of an oil cleaning system.

### DETAILED DESCRIPTION / PREFERRED EMBODIMENT

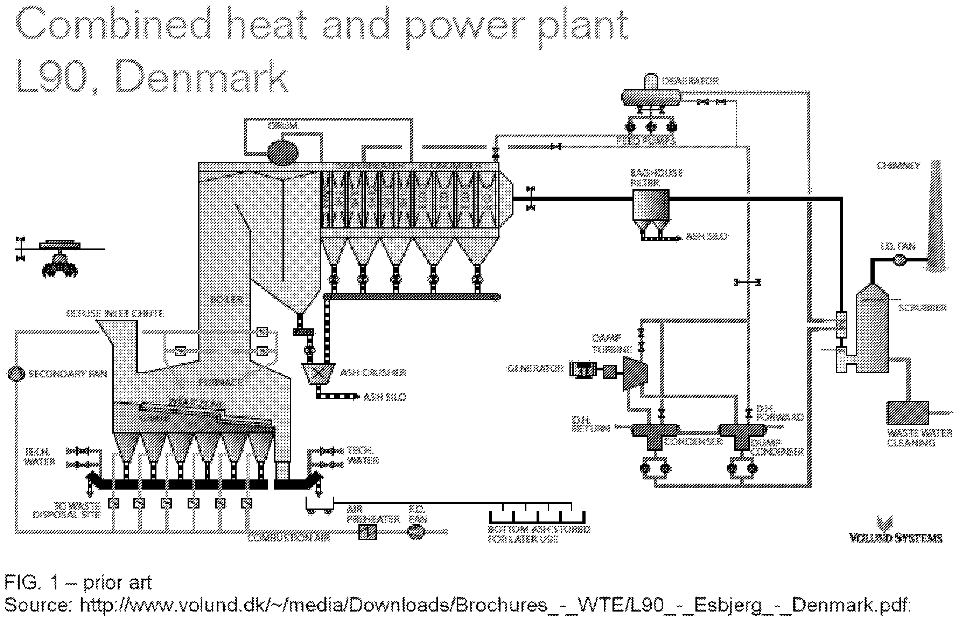

FIG. 1 is a scheme for a waste to energy plant with a steam turbine, brochure from the Internet site http://www.volund.dk/~/media/Downloads/Brochures_-_WTE/L90_-_Esbjerg_-_Denmark.pdf.

The L90 plant in Denmark burns waste material and uses the heat for electricity production as well as for domestic heating. Steam is driving a steam turbine, which, in turn, drives a generator, as indicated in FIG. 1. The plant has a capacity of burning 24 tons waste per hour, which creates 95 tons steam per hour at a pressure of 40 bars and at a temperature of 400°C. The corresponding electricity production is 19.1 MW, resulting in 136 GWh annually, sufficient for 23,000 dwellings. The remaining heat after electricity production contains an even higher energy amount of 56 MW, corresponding to an annual heat production of 451 GWh, sufficient to provide domestic heating for 30,000 dwellings.

Due to the high temperature of the steam, the bearings in the turbine are at elevated temperatures of 100-200°C. When comparing this to the optimum temperature of the oil being 50-60°C, it is understood that the oil is at risk to undergo accelerated degradation. In regard to the lifetime of the oil, also, the take up of water in the oil from the steam as well as air uptake needs attention, as both are deteriorating the oil.

Further, the oil degrades due to particles in the oil as well as formation of sludge, also called varnish. In order to optimise the lifetime of the oil in L90, a continuous filtering is used through cellulose-based filter material having a pore size distribution such that 99.5% of 3 micron particles are removed and 50% of 0.8 micron particles.

Although, this corresponds to design values for keeping the oil useful for at least 5 years, further analysis in connection with the invention has revealed that the filter is not optimised with respect to removal of varnish. This is crucial, because varnish must be removed during filtering as it otherwise tends to cover the metal surfaces in the bearings and pipe system from which it is not easily removed. Removal of oil from the system does not remove the varnish from the system, once the varnish has settled on such surfaces inside the lubrication system of the bearings. Although some of the varnish may dissolve from the metal surfaces into the new oil after an oil change, the result is merely accumulation of varnish in the new oil instead of varnish on the metal parts, and the accumulation of varnish in the new oil leads to accelerated degradation of the new oil. It would require flushing of the system with clean oil from which the varnish is then removed, or the flush oil discarded. Oil changes and flushing with oils are obviously expensive for such plants due to the large oil volume and not desired as a frequent cleaning process. For example, change of the oil for the L90 plant implies costs in the region of Euro 200,000.

On an oil sample of 1000 litres from L90, a test was performed with respect to content of varnish and content of varnish precursors. For the test, a varnish potential rating (VPR) was determined according to the norm ASTM D7843.

For example, the test is described in the EPT brochure "MPC Varnish Potential Testing ASTM D7843) as published on the Internet site of CleanOil.com as follows: http://cleanoil.com/wp-content/uploads/2015/08/MPC_Whitepaper.pdf. In this test, membrane patch colorimetry (MPC) is described, in which the colour measurement is used in accordance with an MPC scale to determine a parameter ΔE for the lubricant's tendency on varnish formation. It reads in this brochure as follows,
"There are 4 levels on the varnish potential scale: Good (ΔE<15), Monitor (ΔE = 15-25), Abnormal (ΔE = 25-35) and Critical (ΔE >35). The higher the MPC value, the higher the amount of varnish deposits and precursors dissolved in the lubricant and the greater the propensity for the lubricant to form harmful varnish deposits. [...] When MPC values are maintained at ΔE <15, the lubricant contains very few varnish precursors and is not prone to deposit formation. Moreover, the lubricant will have high solvency characteristics under all system operating conditions and will actively remove any existing varnish deposits from metal surfaces."

In an experimental test setup, the oil sample was filtered through a highly hydrophilic SiC (silicon carbide) ceramic membrane with a medium pore size of 0.2 micron and a pore size distribution with 90% of the pores under 1 micron and a minimum pore size of 0.04 micron. The membrane is commercially available as a water-filtration membrane from Liqtech International A/S in Denmark, see www.liqtech.com.

In the experiment, the MPC value ΔE, as determined by colorimetry, decreased steadily within the first 4 days (100 hours) from above 40 to around 5 and then stayed constant at a low value of 5. According to the test above, only varnish parameter levels of less than 15 are regarded as good. The initial MCP value of above 40 is critical when having a 5-10 year lifetime of the oil in mind without damage and increased wear to the turbine. In this light, the reduction of the varnish content and the reduction of the MPC value to about 5 is regarded as highly beneficial and desired. This proves that a ceramic filter has a much better performance than cellulose-based filters with respect to sludge/varnish removal.

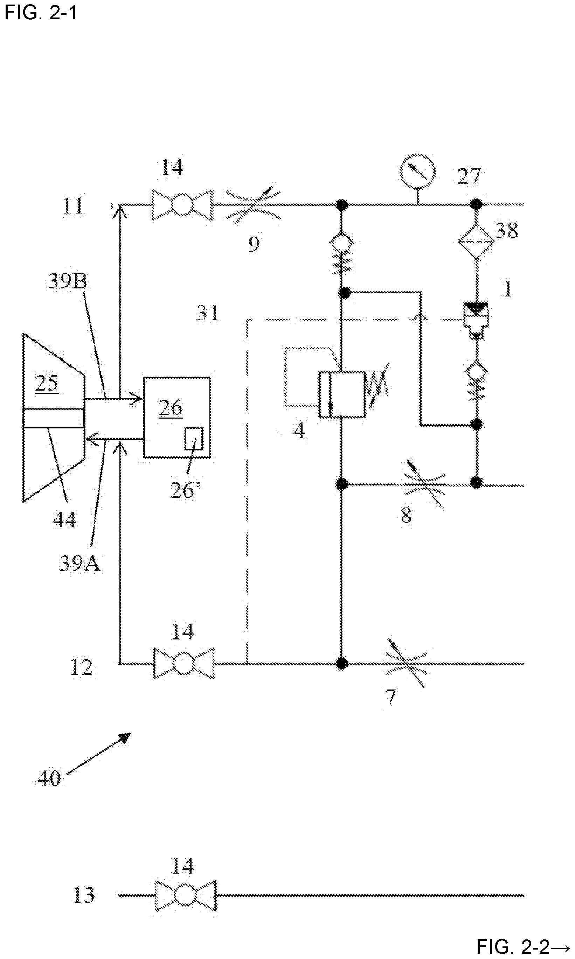

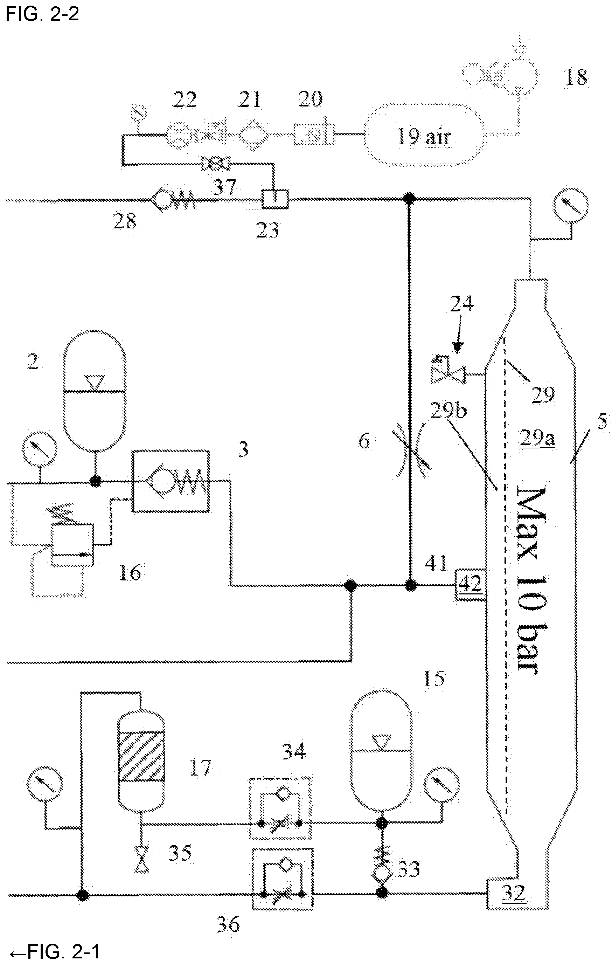

FIG. 2 is a hydraulic flow chart for an example of an oil cleaning system 40 connected with its inlet 11 and outlet 12 to an oil circulation system 26 for lubrication of the bearings 44 of a turbine 25. Alternatively or in addition, the inlet 11 and outlet 12 could be connected to an oil circulation system for the bearings of a gas compressor.

The oil circulation system 26 and the turbine 25 and/or gas compressor (not shown) are part of an industrial plant, for example a power plant or a gas pumping station. The oil cleaning system 40 is potentially an add-on system that is provided separately from the industrial plant, for example for substituting a cellulose based filter system in exchange. Alternatively, the oil cleaning system 40 is integrated into the industrial plant.

In more detail, the turbine 25 bearings 44 are lubricated by oil from an oil circulation system 26, which comprises connection pipes 39A, 39B to and from the turbine 25 and a circulation pump 26' for the circulation of the oil through the bearings 44.

For example, if the oil cleaning system 40 is provided as an add-on circuit with connections at inlet 11 and outlet 12, the necessary pressure for driving the oil through the add-on circuit is, advantageously, provided by the circulation pump 26' of the oil circulation system 26, the latter being standard for lubrication of turbines and typically having an oil pressure of 2-3 bars. This pressure is sufficient for driving the oil into the inlet 11 and through the oil cleaning system 40 to the outlet 13.

Alternatively, a separate pump could be used for the oil cleaning system 40 to extract the oil from an oil reservoir in the circulation system 26. For example, such separate pump is provided between the inlet 11 and the flow controller 9.

In FIG. 2, the inlet 11 of the oil cleaning system 40 is connected to the flow pipe 39b from the turbine 25 to the oil circulation system 26, and the outlet 12 is connected to the flow pipe 39A towards the turbine 25. The latter is advantageous in that the cleanest oil is entering the bearings of the turbine 25 and thereby removes some of the varnish/sludge, which is then taken out through the inlet 11. However, the connection of the inlet 11 and outlet 12 could be swapped with respect to their position. Further, it is also possible to have the oil cleaning system 40 connected with both inlet and outlet to only one of the connection pipes 39A, 39B at different positions with the outlet 12 being downstream of the inlet 11, the different positions being far enough from each other such that the inlet 11 does not receive oil just released from the outlet 13.

The oil cleaning system 40 functions as follows. A minor part of oil from the oil circulation system 26 is branched off and enters the add-on circuit at inlet 11. Downstream of an inlet ball valve 14, the oil flow from the inlet 11 is regulated by a flow controller 9, which is open for flow during normal filtering mode. The oil pressure is measured with pressure meter 27 before the oil passes a check valve 28 and flows into the filter housing 5. Inside the filter housing 5, there is provided a microporous ceramic membrane 29 through which the oil is flowing for filtration in normal filtration mode from an upstream side 29a in the filter housing 5, which is upstream of the microporous ceramic membrane 29, to the downstream side 29b in the filter housing 5, which is downstream of the microporous ceramic membrane 29. After filtration, the oil flows out of the downstream exit 42 of the filter housing 5, through flow controller 7 and ball valve 14 prior to being fed back into the oil circulation system 26 downstream of outlet 12.

A minor part of the oil in the add-on circuit is extracted through course filter 38 for periodic backwashing. It enters a hydraulic pressure intensifier 1, which increases the pressure of the oil, typically by a factor higher than 2, for example from a first pressure level of 2-3 bars to a second pressure level of 6-8 bars. The intensifier 1 is a standard component, typically of the type with two mutually connected pistons with different diameters, where a large-area hydraulic piston, onto which inflow oil exerts pressure, pushes a small-area hydraulic ram against trapped oil which is thereby pressurised at the outflow side of the intensifier 1. The course particle 38 filter upstream of the intensifier 1 is provided for protecting the intensifier against malfunctioning due to larger particles getting trapped in the intensifier. The oil that exerts pressure onto the large-area hydraulic piston is released through release pipe 31 after pushing the small-area hydraulic ram. The pressurised oil from the outflow side of the intensifier 1 is accumulated in a high-pressure oil accumulator 2, downstream of a check valve 30. This pressurised oil in the accumulator is periodically, for example once every hour, released through check valve 3 that is pilot operated by a valve pilot control 16. Optionally, the backwash is triggered by the oil in the high-pressure oil accumulator 2 achieving a predetermined pressure level, for example 8 bar.

For backwash, flow controllers 6 and 7 are closed, why the pressurised oil from the high-pressure oil accumulator 2 can only flow backwards from the downstream side 29b through the membrane 29 to the upstream side 29a, which removes particles from the influent side of the filter 29. This backwash creates elevated pressure in the upstream side 29a. As the check valve 28 upstream of the filter housing 5 closes the upstream side 29a in the direction towards the inlet 11, the pressurised oil in the upstream side 29a is released out of the filter housing 5 through a filter housing exit 32 and into a backwash accumulator 15. The filter housing exit 32 is advantageously at the bottom of the filter housing 5 in order to remove particles accumulating in the filter housing 5, as the particles will drop to the bottom of the filter housing 5.

At the end of the backwash cycle, flow controller 7 is opened, and the elevated pressure in the upstream side 29a is released through the membrane 29 and through the flow controller 7 and further through outlet 12 for feeding it back into the oil circulation system 26. As the pressure in the upstream side 29a drops to a normal level, the normal filtering cycle starts again.

Once, the pressure in the upstream side 29a drops again after backwash, flow of high-pressure backwash oil from the backwash accumulator 15 back into the upstream side 29a in the filter housing 5 is prevented by check valve 33. The backwash oil that has been accumulated in the backwash accumulator 15 is gradually released from the backwash accumulator 15 through a throttle 34 into a particle separator 17. In order to promote quick settling of the particles to the bottom of the particle separator 17, the flow through throttle 34 is adjusted so that the oil entering the particle separator 17 is not causing turbulence in the particle separator 17.

For example, in order for the backwash accumulator 15 to be ready for uptake of oil from the next backwash pulse, the release speed of oil from the backwash accumulator 15 is equal or higher than the oil flow from the intensifier 1 to the high-pressure oil accumulator 2. Alternatively, the backwash is only triggered once the backwash oil in the backwash accumulator 15 has reached a level such that the backwash accumulator 15 can take up the volume of from the next backwash cycle.

In the particle separator 17, the slow flow of oil particles results in the particles settling on the bottom of the particle separator 17 which can be released through a drain valve 35. Also, water will accumulate in the bottom of the particle separator 17, while the oil will remain at the top for release through throttle 36 back into the upstream side 29a of the filter housing. Alternatively, it can be released through valve 14 and drain 13.

For maintenance, a periodic forward-flush through the filter housing 5 can be added, for example immediately after a backwash. For the forward flush, flow controller 6 is opened, and high-pressurized oil from the high-pressure oil accumulator 2 will flow not only into the downstream side 29b but also through flow controller 6 into the upstream side 29a of the filter housing 5. When drain valve 14 is opened as well as flow controller 36, the high-pressure on the upstream side 29a will cause the oil to flush along the inflow side of the filter membrane 29 towards and out of the filter housing exit 32 at the bottom of the filter housing 5, and further through the flow controller 36, through the valve 14 and out of drain 13, taking with it possible particles and sludge that may have accumulated in the bottom of the filter housing 5.

The back pressure from the flow through flow controller 6 into the upstream side 29a causes only a portion of the pressurized oil from the high-pressure oil accumulator 2 to pass through the flow controller 6 and another portion to pass through the membrane 29 from the downstream side 29b to the upstream side 29a such that backwash and forward-flush work simultaneously, which is very efficient for removing particles from the influent side of the membrane. Whereas the backwash flow through the membrane 29 released particles from the influent side of the membrane, especially release out of the pores, the forward flush along membrane in the upstream side 29a additionally drags the particles off the surface of the membrane 29, thereby intensifying the backwash. By adjusting the flow controllers 6 and 36, the flow ratio and speed of the backwash flow through the membrane and the forward flush flow in the upstream side 29a can be adjusted as well as the ratio between these two flows.

In the drawing, the membrane 29 is schematically illustrated as a flat or tubular membrane. However, other configurations are possible, for example a monolith with a honeycomb structure.

If a further valve is provided at position 41 near or at the downstream exit 42 of the filter housing 5, closing of such further valve, while flow controller 6 is open, during release of pressurised oil from the high-pressure oil accumulator 2 will result in only forward flush.

Typically, the backwash is done more frequently than the combined backwash and forward flush.

In order to remove water from the oil, which is another important issue, the system is optionally provided with an air supply comprising an air compressor 18, air reservoir 19, filter and regulator 20, air dryer 21 and air flow meter 22. For example, the air is dried in the air dryer 21 by cooling it down to a dew point of minus 40°C, in order for condensing most water vapor out of the air. The dried air is released through air valve 37 and through air injection nozzle 23 or, alternatively, through a porous air distributor, such as a sintered metal or a ceramic air insert. Once inside the oil, the air is heated to the elevated temperature of the oil, for example in the temperature range of 100-200°C, which boosts the capacity of the released air to take up water from the oil.

The air-enriched oil that flows into the filter housing 5 will release the air as steam-enriched small bubbles, which accumulate at the top of the filter housing 5, from which the air is released from the downstream side through a gas separator 24. The membrane 29 causes increased tendency to air release from the oil after the oil has passed the membrane 29. Also other gases are extracted through the gas separator 24.

In an experimental test setup working on the same principle, 85% of the water contained in the oil was removed within 2 days and 99% within 3 days. The water content in an experiment could be brought down from 6918 ppm to 68 ppm, which is a very low water content.

### Reference number list

1 Intensifier
2 High-pressure oil accumulator
3 Check Valve, Pilot to open
4 Pressure Relief Valve. 10bar
5 Filter housing
6 Flow controller - Normally Closed, only open when back-flushing.
7 Flow controller - Normally Open, only closed when back-flushing.
8 Flow controller - Normally Closed, only for pressure relief
9 Flow controller - Normally Open
11 Inlet
12 Outlet
13 Drain pipe
14 Ball Valve, full bore
15 Backwash accumulator
16 Pilot operated control valve
17 Separator.
18 Air compressor
19 Air reservoir
20 Air supply with filter & regulator
21 Air dryer -40dg.C
22 Flowmeter
23 Air injection spray nozzle
24 Gas Separator
25 Turbine
26 Oil circulation system for turbine 25
27 Circulation pump of oil circulation system 26
27 Pressure meter downstream of flow controller 9
28 Check valve upstream of filter housing 5
29 Microporous ceramic membrane
30 Check valve downstream of intensifier 1
31 Oil release pipe from intensifier 1
32 Filter housing exit
33 Check valve towards backwash accumulator 15
34 Throttle
35 Drain valve
36 Optional position for further flow controller
37 Air valve
38 Filter upstream of intensifier 1
39A Flow pipe from pump 26' to turbine
39B Flow pipe from turbine to pump 26'
40 Oil cleaning system
41 Position for additional valve at downstream exit 42 of the filter housing 5
42 Downstream exit of filter housing 5
44 Bearings of turbine 25

## Claims

1. A method of lubricating the bearings of an axial-flow gas compressor or a turbine (25), the gas compressor or turbine (25) comprising bearings, the bearings being connected to an oil circulation system (26) with a circulation pump (26') for circulation of oil through the bearings for lubrication thereof, the method comprising providing an oil cleaning system for cleaning the oil, the oil cleaning system having an inlet (11) for receiving oil at a first pressure level and an outlet (12) for delivering cleaned oil for lubrication of the bearings, the oil cleaning system further comprising a filter housing (5) between the inlet (11) and the outlet (12) and a filter (29) inside the filter housing (5), the filter (29) separating an upstream side (29a) from a downstream side (29b) in the filter housing (5), wherein the method further comprises providing a flow of the oil from the inlet (11) into the upstream side (29a) in filter housing (5), through the filter (29) into the downstream side (29b) and through the outlet (12), wherein the filter (29) is a microporous ceramic filter membrane, **characterized in that** the oil cleaning system comprises a backwash facility for backwashing the filter (29) with backwash oil, the backwash facility comprising a high-pressure oil accumulator (2); wherein the method comprises accumulating oil for backwash in the high-pressure oil accumulator at a second pressure level, which is higher than the first pressure level, and backwashing the filter (29) by pressing the oil for backwash from the high-pressure oil accumulator (2) against the first pressure level backwards through the ceramic microporous filter (29) and into the upstream side (29a).

2. A method according to claim 1, wherein the backwash facility further comprises a backwash accumulator (15) that is pipe-connected to the upstream side (29a) and the method comprises backwashing the filter (29) and during backwashing receiving backwash oil by the backwash accumulator (15) from the upstream side (29a) at the second pressure level.

3. A method according to claim 2, wherein the backwash accumulator (15) is connected to a particle separator (17) through a throttle (34), the particle separator (17) comprising a tank with a bottom and being configured for settling of the particles at the bottom; the particle separator (17) further comprising a separator oil drain above the bottom for drain of oil from the particle separator (17); wherein the method comprises causing flow of backwash oil from the backwash accumulator (15) to the particle separator (17) through the throttle (34) and preventing turbulence in the particle separator (17) by adjusting the throttle (34) to a non-turbulent flow into the particle separator (17), causing the particles to settle to the bottom of the particle separator (17), and removing the particles through a drain at the bottom.

4. A method according to claim 3, wherein the method comprises draining oil from the particle separator (17) through the separator oil drain and returning the oil from the particle separator (17) through a pipe into the upstream side (29a) of the filter housing (5) while not backwashing.

5. A method according to claim 3 or 4, wherein the method comprises performing backwash of the filter (29) periodically with a first volume of backwash oil from the high-pressure oil accumulator (2), wherein the method comprises, after a backwash, providing a flow of backwash oil from the backwash accumulator (15) to the particle separator (17) corresponding to at least the first volume prior to a subsequent backwash in order to provide sufficient space in the backwash accumulator (15) for take up of backwash oil corresponding to the first volume.

6. A method according to any preceding claim, wherein the method comprises injecting air into the oil and causing the air to take up water from the oil, and the method further comprising separating humidified air from the oil.

7. A method according to claim 6, wherein the method comprises drying the air prior to injecting the air into the oil for increasing the water uptake capability of the air.

8. A method according to any preceding claim, the method comprising providing a gas separator (24) connected to the downstream side (29b) and extracting gas and air from the downstream side (29b) by the gas separator (24).

9. An industrial plant comprising an axial-flow gas compressor or a turbine (25) or both, the gas compressor or turbine (25) comprising bearings, the bearings being connected to an oil circulation system with a circulation pump for circulation of oil through the bearings for lubrication thereof, the industrial plant further comprising an oil cleaning system, the oil cleaning system comprising an inlet (11) for receiving the oil at a first pressure level for filtration of the oil and an outlet (12) for delivering the oil for lubrication of the bearings after filtration, and further comprising a filter housing (5) between the inlet (11) and the outlet (12) and with a filter (29) inside the filter housing (5), the filter (29) separating an upstream side (29a) and a downstream side (29b) in the filter housing (5), wherein the filter (29) is a microporous ceramic filter membrane, wherein the oil circulation system comprises a backwash facility for backwashing the filter (29) with backwash oil, **characterized in that** the backwash facility comprises a hydraulic pressure intensifier (1) for providing a backwash oil at a second pressure level and a high-pressure oil accumulator (2) for accumulating backwash oil at the second pressure level, which is higher than the first pressure level, in order for the second pressure level to press the backwash oil against the first pressure level backwards through the ceramic microporous filter (29) and into the upstream side (29a) during backwashing, wherein the backwash facility further comprises a backwash accumulator (15) pipe-connected to the upstream side (29a) and configured for receiving backwash oil from the upstream side (29a) at the second pressure level during backwash; wherein the backwash accumulator is connected to a particle separator (17) through a throttle (34), adjustable for flow of backwash oil into the particle separator (17) without turbulence, the particle separator (17) comprising a tank with a bottom for settling of the particles at the bottom; the particle separator (17) further comprising a separator oil drain above the bottom for drain of oil from the particle separator (17); wherein the separator oil drain is pipe-connected to the the upstream side (29a) for returning the oil from the particle separator (17) to the upstream side (29a) while not backwashing.

10. An industrial plant according to claim 9, wherein the plant is a power plant with an electrical generator driven by the turbine (25), or wherein the plant is a gas pumping station, and the gas compressor is arranged for pumping gas into a pipeline system.

11. An industrial plant according to claims 9 or 10, further comprising an air injection facility for injecting air into the oil for take up of water from the oil by the air, and a gas separator (24) for separating humidified air from the oil.

12. An industrial plant according to claim 11, wherein the air injection facility comprises an air drier (21) for removing moisture from the air prior to injecting the air into the oil for increasing the water uptake capability of the air.

13. An oil cleaning system for an industrial plant according to anyone of the claims 10-12, wherein the plant is of the type comprising an axial-flow gas compressor or a turbine (25), the gas compressor or turbine (25) comprising bearings, the bearings being connected to an oil circulation system with a circulation pump for circulation of lubrication oil through the bearings for lubrication thereof; wherein the oil cleaning system is an add-on unit comprising an inlet (11) connectable to the oil circulation system (26) for receiving the oil from the oil circulation system (26) at a first pressure level for filtration of the oil and an outlet (12) connectable to the oil circulation system (26) for delivering the oil back to the oil circulation system (26) after filtration; the oil cleaning system further comprising a filter housing (5) between the inlet (11) and the outlet (12) and with a filter (29) inside the filter housing (5), the filter (29) separating an upstream side (29a) and a downstream side (29b) in the filter housing (5), wherein the filter (29) is a microporous ceramic filter membrane, wherein the oil cleaning system comprises a backwash facility for backwashing the filter (29) with backwash oil, **characterized in that** the backwash facility comprises a hydraulic pressure intensifier (1) for providing a backwash oil at a second pressure level and a high-pressure oil accumulator (2) for accumulating backwash oil at the second pressure level, which is higher than the first pressure level, in order for the second pressure level to press the backwash oil against the first pressure level backwards through the ceramic microporous filter (29) and into the upstream side (29a) during backwashing.

14. An oil cleaning system according to claim 13, the oil cleaning system being configured for flow of oil through the inlet (11) and through the filter (29) and out of the outlet (12) by oil pressure caused only by the circulation pump of the oil circulation system (26).

15. An oil cleaning system according to claim 13 or 14, wherein the hydraulic pressure intensifier (1) configured for pressurizing the oil for the high-pressure oil accumulator (2), wherein the pressure intensifier (1) is of the type comprising two mutually connected pistons with different diameters, wherein the one piston is a large-area hydraulic piston configured for receiving pressure from inflow oil at an inflow side of the intensifier for pushing the other piston, which is a small-area hydraulic ram, against outflow oil at an outflow side of the intensifier for thereby pressurizing the outflow oil.

16. An oil cleaning system according to any one of the claims 13-15, further comprising an air injection facility for injecting air into the oil for take up of water from the oil by the air, and a gas separator (24) for separating humidified air from the oil.

17. An oil cleaning system according to claim 16, wherein the air injection facility comprises an air drier (21) for removing moisture from the air prior to injecting the air into the oil for increasing the water uptake capability of the air.

18. An oil cleaning system according to any one of the claims 13-17, wherein the oil cleaning system comprises a gas separator (24) connected to the downstream side (29b) for extracting gas and air from the downstream side (29b) by the gas separator (24).

19. An oil cleaning system according to any one of the claims 13-18, wherein the microporous ceramic filter membrane is a hydrophilic silicon carbide ceramic membrane with a medium pore size of 0.2 microns and a pore size distribution with 90% of the pores under 1 micron and a minimum pore size of 0.04 microns.

20. Use of a method according to anyone of the claims 1-8 or of an oil cleaning system according to anyone of the claims 13-19 for minimizing varnish formation in oil of an industrial plant, wherein the industrial plant is a power plant in which the turbine is connected to an electrical generator for driving the generator, or wherein the industrial plant is a gas pumping station in which the axial-flow gas compressor is arranged for pumping gas into a pipeline system.

## Patentansprüche

1. Verfahren zum Schmieren der Lager eines Axialflussgasverdichters oder einer Turbine (25), wobei der Gasverdichter oder die Turbine (25) Lager umfasst, wobei die Lager mit einer Zirkulationspumpe (26') mit einem Ölzirkulationssystem (26) zur Zirkulation von Öl durch die Lager zur Schmierung davon verbunden sind, wobei das Verfahren das Bereitstellen eines Ölreinigungssystems zum Reinigen des Öls umfasst, wobei das Ölreinigungssystem einen Einlass (11) zum Empfangen von Öl bei einem ersten Druckniveau und einen Auslass (12) zum Liefern von gereinigtem Öl zur Schmierung der Lager aufweist, wobei das Ölreinigungssystem ferner ein Filtergehäuse (5) zwischen dem Einlass (11) und dem Auslass (12) und einen Filter (29) innerhalb des Filtergehäuses (5) umfasst, wobei der Filter (29) eine stromaufwärtige Seite (29a) von einer stromabwärtigen Seite (29b) in dem Filtergehäuse (5) trennt, wobei das Verfahren ferner das Bereitstellen eines Flusses des Öls von dem Einlass (11) in die stromaufwärtige Seite (29a) in dem Filtergehäuse (5), durch den Filter (29) in die stromabwärtige Seite (29b) und durch den Auslass (12) umfasst, wobei der Filter (29) eine mikroporöse keramische Filtermembran ist, **dadurch gekennzeichnet, dass** das Ölreinigungssystem eine Rückspüleinrichtung zum Rückspülen des Filters (29) mit Rückspülöl umfasst, wobei die Rückspüleinrichtung einen Ölhochdruckspeicher (2) umfasst; wobei das Verfahren das Ansammeln von Öl zum Rückspülen in dem Ölhochdruckspeicher bei einem zweiten Druckniveau, das höher als das erste Druckniveau ist, und das Rückspülen des Filters (29) durch Drücken des Öls zum Rückspülen aus dem Ölhochdruckspeicher (2) gegen das erste Druckniveau rückwärts durch den keramischen mikroporösen Filter (29) und in die stromaufwärtige Seite (29a) umfasst.

2. Verfahren nach Anspruch 1, wobei die Rückspüleinrichtung ferner einen Rückspülspeicher (15) umfasst, der mit der stromaufwärtigen Seite (29a) rohrverbunden ist, und das Verfahren das Rückspülen des Filters (29) und während des Rückspülens das Empfangen von Rückspülöl durch den Rückspülspeicher (15) von der stromaufwärtigen Seite (29a) bei dem zweiten Druckniveau umfasst.

3. Verfahren nach Anspruch 2, wobei der Rückspülspeicher (15) durch eine Drossel (34) mit einem Partikelabscheider (17) verbunden ist, wobei der Partikelabscheider (17) einen Tank mit einem Boden umfasst und konfiguriert ist, um die Partikel an dem Boden abzusetzen; wobei der Partikelabscheider (17) ferner einen Abscheiderölablauf über dem Boden für Ablauf von Öl aus dem Partikelabscheider (17) umfasst; wobei das Verfahren das Bewirken von Fluss von Rückspülöl aus dem Rückspülspeicher (15) zu dem Partikelabscheider (17) durch die Drossel (34) und das Verhindern von Turbulenz in dem Partikelabscheider (17) durch Einstellen der Drossel (34) auf einen nichtturbulenten Fluss in den Partikelabscheider (17), wodurch bewirkt wird, dass sich die Partikel an dem Boden des Partikelabscheiders (17) absetzen, und das Entfernern der Partikel durch einen Ablauf an dem Boden umfasst.

4. Verfahren nach Anspruch 3, wobei das Verfahren das Ablaufen von Öl aus dem Partikelabscheider (17) durch den Abscheiderölablauf und das Rückführen des Öls aus dem Partikelabscheider (17) durch ein Rohr in die stromaufwärtige Seite (29a) des Filtergehäuses (5) umfasst, während nicht rückgespült wird.

5. Verfahren nach Anspruch 3 oder 4, wobei das Verfahren das periodische Durchführen von Rückspülung des Filters (29) mit einem ersten Volumen an Rückspülöl aus dem Ölhochdruckspeicher (2) umfasst, wobei das Verfahren nach einer Rückspülung das Bereitstellen eines Flusses von Rückspülöl aus dem Rückspülspeicher (15) zu dem Partikelabscheider (17), der zumindest dem ersten Volumen entspricht, vor einer nachfolgenden Rückspülung umfasst, um ausreichend Platz in dem Rückspülspeicher (15) zur Aufnahme von Rückspülöl, das dem ersten Volumen entspricht, bereitzustellen.

6. Verfahren nach einem vorhergehenden Anspruch, wobei das Verfahren das Einspritzen von Luft in das Öl und das Bewirken, dass die Luft Wasser aus dem Öl aufnimmt, umfasst und das Verfahren ferner das Trennen von befeuchteter Luft von dem Öl umfasst.

7. Verfahren nach Anspruch 6, wobei das Verfahren das Trocknen der Luft vor dem Einspritzen der Luft in das Öl umfasst, um die Wasseraufnahmefähigkeit der Luft zu erhöhen.

8. Verfahren nach einem vorhergehenden Anspruch, wobei das Verfahren das Bereitstellen eines Gasabscheiders (24), der mit der stromabwärtigen Seite (29b) verbunden ist, und das Extrahieren von Gas und Luft von der stromabwärtigen Seite (29b) durch den Gasabscheider (24) umfasst.

9. Industriewerk, das einen Axialflussgasverdichter oder eine Turbine (25) oder beides umfasst, wobei der Gasverdichter oder die Turbine (25) Lager umfasst, wobei die Lager mit einem Ölzirkulationssystem mit einer Zirkulationspumpe zur Zirkulation von Öl durch die Lager zur Schmierung davon verbunden sind, wobei das Industriewerk ferner ein Ölreinigungssystem umfasst, wobei das Ölreinigungssystem einen Einlass (11) zum Empfangen des Öls bei einem ersten Druckniveau zum Filtern des Öls und einen Auslass (12) zum Liefern des Öls zur Schmierung der Lager nach Filtration umfasst, und ferner umfassend ein Filtergehäuse (5) zwischen dem Einlass (11) und dem Auslass (12) und mit einem Filter (29) innerhalb des Filtergehäuses (5), wobei der Filter (29) eine stromaufwärtige Seite (29a) und eine stromabwärtige Seite (29b) in dem Filtergehäuse (5) trennt, wobei der Filter (29) eine mikroporöse keramische Filtermembran ist, wobei das Ölzirkulationssystem eine Rückspüleinrichtung zum Rückspülen des Filters (29) mit Rückspülöl umfasst, **dadurch gekennzeichnet, dass** die Rückspüleinrichtung einen hydraulischen Druckübersetzer (1) zum Bereitstellen eines Rückspülöls bei einem zweiten Druckniveau und einen Ölhochdruckspeicher (2) zum Speichern von Rückspülöl bei dem zweiten Druckniveau umfasst, das höher als das erste Druckniveau ist, damit das zweite Druckniveau das Rückspülöl gegen das erste Druckniveau rückwärts durch den keramischen mikroporösen Filter (29) und in die stromaufwärtige Seite (29a) während des Rückspülens drückt, wobei die Rückspüleinrichtung ferner einen Rückspülspeicher (15) umfasst, der mit der stromaufwärtigen Seite (29a) rohrverbunden und konfiguriert ist, um Rückspülöl von der stromaufwärtigen Seite (29a) bei dem zweiten Druckniveau während der Rückspülung aufzunehmen; wobei der Rückspülspeicher mit einem Partikelabscheider (17) durch eine Drossel (34) verbunden ist, die für Fluss von Rückspülöl in den Partikelabscheider (17) ohne Turbulenz einstellbar ist, wobei der Partikelabscheider (17) einen Tank mit einem Boden zum Absetzen der Partikel an dem Boden umfasst; wobei der Partikelabscheider (17) ferner einen Abscheiderölablauf über dem Boden für Ablauf von Öl aus dem Partikelabscheider (17) umfasst; wobei der Abscheiderölablauf mit der stromaufwärtigen Seite (29a) rohrverbunden ist, um das Öl von dem Partikelabscheider (17) zu der stromaufwärtigen Seite (29a) rückzuführen, während nicht rückgespült wird.

10. Industriewerk nach Anspruch 9, wobei das Werk ein Kraftwerk mit einem elektrischen Generator ist, der durch die Turbine (25) angetrieben wird, oder wobei das Werk eine Gaspumpstation ist und der Gasverdichter angeordnet ist, um Gas in ein Pipelinesystem zu pumpen.

11. Industriewerk nach Anspruch 9 oder 10, ferner umfassend eine Lufteinspritzeinrichtung zum Einspritzen von Luft in das Öl zur Aufnahme von Wasser aus dem Öl durch die Luft, und einen Gasabscheider (24) zum Trennen von befeuchteter Luft von dem Öl.

12. Industriewerk nach Anspruch 11, wobei die Lufteinspritzeinrichtung einen Lufttrockner (21) zum Entfernen von Feuchtigkeit aus der Luft vor dem Einspritzen der Luft in das Öl zum Erhöhen der Wasseraufnahmefähigkeit der Luft umfasst.

13. Ölreinigungssystem für ein Industriewerk nach einem der Ansprüche 10-12, wobei das Werk von der Art ist, die einen Axialflussgasverdichter oder eine Turbine (25) umfasst, wobei der Gasverdichter oder die Turbine (25) Lager umfasst, wobei die Lager mit einem Ölzirkulationssystem mit einer Zirkulationspumpe zur Zirkulation von Schmieröl durch die Lager zur Schmierung davon verbunden sind; wobei das Ölreinigungssystem eine Zusatzeinheit ist, die einen Einlass (11), der mit dem Ölzirkulationssystem (26) zum Empfangen des Öls von dem Ölzirkulationssystem (26) bei einem ersten Druckniveau für Filtration des Öls verbindbar ist, und einen Auslass (12) umfasst, der mit dem Ölzirkulationssystem (26) zum Liefern des Öls zurück zu dem Ölzirkulationssystem (26) nach Filtration verbindbar ist; wobei das Ölreinigungssystem ferner ein Filtergehäuse (5) zwischen dem Einlass (11) und dem Auslass (12) und mit einem Filter (29) innerhalb des Filtergehäuses (5) umfasst, wobei der Filter (29) eine stromaufwärtige Seite (29a) und eine stromabwärtige Seite (29b) in dem Filtergehäuse (5) trennt, wobei der Filter (29) eine mikroporöse keramische Filtermembran ist, wobei das Ölreinigungssystem eine Rückspüleinrichtung zum Rückspülen des Filters (29) mit Rückspülöl umfasst, **dadurch gekennzeichnet, dass** die Rückspüleinrichtung einen hydraulischen Druckübersetzer (1) zum Bereitstellen eines Rückspülöls bei einem zweiten Druckniveau und einen Ölhochdruckspeicher (2) zum Speichern von Rückspülöl bei dem zweiten Druckniveau umfasst, das höher als der erste Druckniveau ist, damit das zweite Druckniveau das Rückspülöl gegen das erste Druckniveau rückwärts durch den keramischen mikroporösen Filter (29) und in die stromaufwärtige Seite (29a) während des Rückspülens drückt.

14. Ölreinigungssystem nach Anspruch 13, wobei das Ölreinigungssystem für Fluss von Öl durch den Einlass (11) und durch den Filter (29) und aus dem Auslass (12) durch Öldruck konfiguriert ist, der nur durch die Zirkulationspumpe des Ölzirkulationssystems (26) bewirkt wird.

15. Ölreinigungssystem nach Anspruch 13 oder 14, wobei der hydraulische Druckübersetzer (1) zum Unterdrucksetzen des Öls für den Ölhochdruckspeicher (2) konfiguriert ist, wobei der Druckübersetzer (1) von der Art ist, die zwei miteinander verbundene Kolben mit unterschiedlichen Durchmessern umfasst, wobei der eine Kolben ein großflächiger Hydraulikkolben ist, der konfiguriert ist, um Druck von Zuflussöl an einer Zuflussseite des Übersetzers aufzunehmen, um den anderen Kolben, der ein kleinflächiger Hydraulikstößel ist, gegen Abflussöl an einer Ausflussseite des Übersetzers zu drücken, um dadurch das ausströmende Öl unter Druck zu setzen.

16. Ölreinigungssystem nach einem der Ansprüche 13-15, ferner umfassend eine Lufteinspritzeinrichtung zum Einspritzen von Luft in das Öl zur Aufnahme von Wasser aus dem Öl durch die Luft, und einen Gasabscheider (24) zum Trennen von befeuchteter Luft von dem Öl.

17. Ölreinigungssystem nach Anspruch 16, wobei die Lufteinspritzeinrichtung einen Lufttrockner (21) zum Entfernen von Feuchtigkeit aus der Luft vor dem Einspritzen der Luft in das Öl zum Erhöhen der Wasseraufnahmefähigkeit der Luft umfasst.

18. Ölreinigungssystem nach einem der Ansprüche 13-17, wobei das Ölreinigungssystem einen Gasabscheider (24) umfasst, der mit der stromabwärtigen Seite (29b) verbunden ist, um Gas und Luft von der stromabwärtigen Seite (29b) durch den Gasabscheider (24) zu extrahieren.

19. Ölreinigungssystem nach einem der Ansprüche 13-18, wobei die mikroporöse keramische Filtermembran eine hydrophile Siliziumkarbid-Keramikmembran mit einer mittleren Porengröße von 0,2 Mikrometern und einer Porengrößenverteilung mit 90 % der Poren unter 1 Mikrometer und einer Mindestporengröße von 0,04 Mikrometern ist.

20. Verwendung eines Verfahrens nach einem der Ansprüche 1-8 oder eines Ölreinigungssystems nach einem der Ansprüche 13-19 zum Minimieren von Lackbildung in Öl eines Industriewerks, wobei das Industriewerk ein Kraftwerk ist, in dem die Turbine mit einem elektrischen Generator zum Antreiben des Generators verbunden ist, oder wobei das Industriewerk eine Gaspumpstation ist, in welcher der Axialflussgasverdichter angeordnet ist, um Gas in ein Pipelinesystem zu pumpen.

## Revendications

1. Procédé de lubrification des roulements d'un compresseur de gaz à flux axial ou d'une turbine (25), le compresseur de gaz ou la turbine (25) comprenant des roulements, les roulements étant reliés à un système de circulation d'huile (26) avec une pompe de circulation (26') pour la circulation d'huile via les roulements pour leur lubrification, le procédé comprenant la fourniture d'un système de nettoyage d'huile pour nettoyer l'huile, le système de nettoyage d'huile ayant une entrée (11) pour recevoir de l'huile à un premier niveau de pression et une sortie (12) pour distribuer de l'huile nettoyée pour la lubrification des roulements, le système de nettoyage d'huile comprenant en outre un boîtier de filtre (5) entre l'entrée (11) et la sortie (12) et un filtre (29) à l'intérieur du boîtier de filtre (5), le filtre (29) séparant un côté amont (29a) d'un côté aval (29b) dans le boîtier de filtre (5), dans lequel le procédé comprend en outre la fourniture d'un flux de l'huile depuis l'entrée (11) dans le côté amont (29a) dans le boîtier de filtre (5), via le filtre (29) dans le côté aval (29b) et via la sortie (12), dans lequel le filtre (29) est une membrane filtrante en céramique microporeuse, **caractérisé en ce que** le système de nettoyage d'huile comprend une installation de lavage à contre-courant pour laver à contre-courant le filtre (29) avec de l'huile de lavage à contre-courant, l'installation de lavage à contre-courant comprenant un accumulateur d'huile haute pression (2) ; dans lequel le procédé comprend l'accumulation d'huile pour le lavage à contre-courant dans l'accumulateur d'huile haute pression à un second niveau de pression, qui est supérieur au premier niveau de pression, et le lavage à contre-courant du filtre (29) en pressant l'huile pour le lavage à contre-courant depuis l'accumulateur d'huile haute pression (2) contre le premier niveau de pression vers l'arrière via le filtre en céramique microporeuse (29) et dans le côté amont (29a).

2. Procédé selon la revendication 1, dans lequel l'installation de lavage à contre-courant comprend en outre un accumulateur de lavage à contre-courant (15) qui est raccordé par tuyau au côté amont (29a) et le procédé comprend le lavage à contre-courant du filtre (29) et pendant le lavage à contre-courant la réception d'huile de lavage à contre-courant par l'accumulateur (15) du côté amont (29a) au second niveau de pression.

3. Procédé selon la revendication 2, dans lequel l'accumulateur de lavage à contre-courant (15) est relié à un séparateur de particules (17) via un accélérateur (34), le séparateur de particules (17) comprenant un réservoir avec un fond et étant configuré pour le dépôt des particules au fond ; le séparateur de particules (17) comprenant en outre un drain d'huile de séparateur au-dessus du fond pour drainer l'huile du séparateur de particules (17) ; dans lequel le procédé comprend le fait d'amener un flux d'huile de lavage à contre-courant de l'accumulateur de lavage à contre-courant (15) vers le séparateur de particules (17) via l'accélérateur (34) et d'empêcher des turbulences dans le séparateur de particules (17) en réglant l'accélérateur (34) sur un flux non turbulent dans le séparateur de particules (17), amenant les particules à se déposer au fond du séparateur de particules (17), et éliminant les particules via un drain au fond.

4. Procédé selon la revendication 3, dans lequel le procédé comprend le drainage de l'huile du séparateur de particules (17) via le drain d'huile du séparateur et le renvoi de l'huile du séparateur de particules (17) via un tuyau dans le côté amont (29a) du boîtier de filtre (5) sans lavage à contre-courant.

5. Procédé selon la revendication 3 ou 4, dans lequel le procédé comprend la réalisation d'un lavage à contre-courant du filtre (29) périodiquement avec un premier volume d'huile de lavage à contre-courant de l'accumulateur d'huile haute pression (2), dans lequel le procédé comprend, après un lavage à contre-courant, la fourniture un flux d'huile de lavage à contre-courant depuis l'accumulateur de lavage à contre-courant (15) vers le séparateur de particules (17) correspondant au moins au premier volume avant un lavage à contre-courant ultérieur afin de fournir un espace suffisant dans l'accumulateur de lavage à contre-courant (15) pour l'absorption d'huile de lavage à contre-courant correspondant au premier volume.

6. Procédé selon une quelconque revendication précédente, dans lequel le procédé comprend l'injection d'air dans l'huile et le fait d'amener l'air à absorber l'eau de l'huile, et le procédé comprend en outre la séparation de l'air humidifié de l'huile.

7. Procédé selon la revendication 6, dans lequel le procédé comprend le séchage de l'air avant d'injecter l'air dans l'huile pour augmenter la capacité d'absorption d'eau de l'air.

8. Procédé selon une quelconque revendication précédente, le procédé comprenant la fourniture d'un séparateur de gaz (24) relié au côté aval (29b) et l'extraction de gaz et d'air du côté aval (29b) par le séparateur de gaz (24).

9. Installation industrielle comprenant un compresseur de gaz à flux axial ou une turbine (25) ou les deux, le compresseur de gaz ou la turbine (25) comprenant des roulements, les roulements étant reliés à un système de circulation d'huile avec une pompe de circulation pour la circulation d'huile via les roulements pour leur lubrification, l'installation industrielle comprenant en outre un système de nettoyage d'huile, le système de nettoyage d'huile comprenant une entrée (11) pour recevoir l'huile à un premier niveau de pression pour filtrer l'huile et une sortie (12) pour distribuer l'huile pour la lubrification des roulements après filtration, et comprenant en outre un boîtier de filtre (5) entre l'entrée (11) et la sortie (12) et avec un filtre (29) à l'intérieur du boîtier de filtre (5), le filtre (29) séparant un côté amont (29a) et un côté aval (29b) dans le boîtier de filtre (5), dans laquelle le filtre (29) est une membrane filtrante en céramique microporeuse, dans laquelle le système de circulation d'huile comprend une installation de lavage à contre-courant pour laver à contre-courant le filtre (29) avec de l'huile à lavage à contre-courant, **caractérisée en ce que** l'installation de lavage à contre-courant comprend un multiplicateur de pression hydraulique (1) pour fournir une huile de lavage à contre-courant à un second niveau de pression et un accumulateur d'huile haute pression (2) pour accumuler de l'huile de lavage à contre-courant au second niveau de pression, qui est supérieur au premier niveau de pression, afin que le second niveau de pression presse l'huile de lavage à contre-courant contre le premier niveau de pression vers l'arrière via le filtre en céramique microporeuse (29) et dans le côté amont (29a) pendant le lavage à contre-courant, dans laquelle l'installation de lavage à contre-courant comprend en outre un accumulateur de lavage à contre-courant (15) raccordé par tuyau au côté amont (29a) et configuré pour recevoir l'huile de lavage à contre-courant du côté amont (29a) au second niveau de pression pendant le lavage à contre-courant ; dans laquelle l'accumulateur de lavage à contre-courant est relié à un séparateur de particules (17) via un accélérateur (34), réglable pour un flux d'huile de lavage à contre-courant dans le séparateur de particules (17) sans turbulences, le séparateur de particules (17) comprenant un réservoir avec un fond pour le dépôt des particules au fond ; le séparateur de particules (17) comprenant en outre un drain d'huile de séparateur au-dessus du fond pour drainer l'huile du séparateur de particules (17) ; dans laquelle le drain d'huile du séparateur est relié par un tuyau au côté amont (29a) pour renvoyer l'huile du séparateur de particules (17) au côté amont (29a) sans lavage à contre-courant.

10. Installation industrielle selon la revendication 9, dans laquelle l'installation est une centrale électrique avec un générateur électrique entraîné par la turbine (25), ou dans laquelle l'installation est une station de pompage de gaz, et le compresseur de gaz est agencé pour pomper du gaz dans un système de conduites.

11. Installation industrielle selon les revendications 9 ou 10, comprenant en outre une installation d'injection d'air pour injecter de l'air dans l'huile pour absorber l'eau de l'huile par l'air, et un séparateur de gaz (24) pour séparer l'air humidifié de l'huile.

12. Installation industrielle selon la revendication 11, dans laquelle l'installation d'injection d'air comprend un sécheur d'air (21) pour éliminer l'humidité de l'air avant d'injecter l'air dans l'huile pour augmenter la capacité d'absorption d'eau de l'air.

13. Système de nettoyage d'huile pour une installation industrielle selon l'une quelconque des revendications 10 à 12, dans lequel l'installation est du type comprenant un compresseur de gaz à flux axial ou une turbine (25), le compresseur de gaz ou la turbine (25) comprenant des roulements, les roulements étant reliés à un système de circulation d'huile avec une pompe de circulation pour la circulation de l'huile de lubrification via les roulements pour leur lubrification ; dans lequel le système de nettoyage d'huile est une unité supplémentaire comprenant une entrée (11) pouvant être reliée au système de circulation d'huile (26) pour recevoir l'huile du système de circulation d'huile (26) à un premier niveau de pression pour filtrer l'huile et une sortie (12) pouvant être reliée au système de circulation d'huile (26) pour redistribuer l'huile au système de circulation d'huile (26) après filtration ; le système de nettoyage d'huile comprenant en outre un boîtier de filtre (5) entre l'entrée (11) et la sortie (12) et avec un filtre (29) à l'intérieur du boîtier de filtre (5), le filtre (29) séparant un côté amont (29a) et un côté aval (29b) dans le boîtier de filtre (5), dans lequel le filtre (29) est une membrane filtrante en céramique microporeuse, dans lequel le système de nettoyage d'huile comprend une installation de lavage à contre-courant pour laver à contre-courant le filtre (29) avec de l'huile de lavage à contre-courant, **caractérisé en ce que** l'installation de lavage à contre-courant comprend un multiplicateur de pression hydraulique (1) pour fournir une huile de lavage à contre-courant à un second niveau de pression et un accumulateur d'huile haute pression (2) pour accumuler de l'huile de lavage à contre-courant à un second niveau de pression, qui est supérieur à la première pression afin que le second niveau de pression presse l'huile de lavage à contre-courant contre le premier niveau de pression vers l'arrière via le filtre en céramique microporeuse (29) et dans le côté amont (29a) pendant le lavage à contre-courant.

14. Système de nettoyage d'huile selon la revendication 13, le système de nettoyage d'huile étant configuré pour un flux d'huile via l'entrée (11) et via le filtre (29) et hors de la sortie (12) par la pression d'huile causée uniquement par la pompe de circulation du système de circulation d'huile (26).

15. Système de nettoyage d'huile selon la revendication 13 ou 14, dans lequel le multiplicateur de pression hydraulique (1) est configuré pour mettre sous pression l'huile pour l'accumulateur d'huile haute pression (2), dans lequel l'intensificateur de pression (1) est du type comprenant deux pistons reliés entre eux de différents diamètres, dans lequel le premier piston est un piston hydraulique de grande surface configuré pour recevoir la pression de l'huile entrante du côté entrée du multiplicateur pour pousser l'autre piston, qui est un vérin hydraulique de petite surface, contre l'huile sortante d'un côté sortie du multiplicateur pour mettre ainsi sous pression l'huile sortante.

16. Système de nettoyage d'huile selon l'une quelconque des revendications 13 à 15, comprenant en outre une installation d'injection d'air pour injecter de l'air dans l'huile pour absorber l'eau de l'huile par l'air, et un séparateur de gaz (24) pour séparer l'air humidifié de l'huile.

17. Système de nettoyage d'huile selon la revendication 16, dans laquelle l'installation d'injection d'air comprend un sécheur d'air (21) pour éliminer l'humidité de l'air avant d'injecter l'air dans l'huile pour augmenter la capacité d'absorption d'eau de l'air.

18. Système de nettoyage d'huile selon l'une quelconque des revendications 13 à 17, dans lequel le système de nettoyage d'huile comprend un séparateur de gaz (24) relié au côté aval (29b) pour extraire le gaz et l'air du côté aval (29b) par le séparateur de gaz (24).

19. Système de nettoyage d'huile selon l'une quelconque des revendications 13 à 18, dans lequel la membrane filtrante en céramique microporeuse est une membrane céramique en carbure de silicium hydrophile avec une taille de pore moyenne de 0,2 micron et une distribution de taille de pore avec 90 % des pores étant inférieurs à 1 micron et une taille de pore minimale de 0,04 micron.

20. Utilisation d'un procédé selon l'une quelconque des revendications 1 à 8 ou d'un système de nettoyage d'huile selon l'une quelconque des revendications 13 à 19 pour minimiser la formation de vernis dans l'huile d'une installation industrielle, dans laquelle l'installation industrielle est une centrale électrique dans laquelle la turbine est reliée à un générateur électrique pour entraîner le générateur, ou dans laquelle l'installation industrielle est une station de pompage de gaz dans laquelle le compresseur de gaz à flux axial est agencé pour pomper du gaz dans un système de conduites.
